# EUROPÄISCHE PATENTANMELDUNG

(11) **EP 3 456 866 A1**
(43) Veröffentlichungstag der Anmeldung: **20.03.2019**
(21) Anmeldenummer: 18190205.7
(22) Anmeldetag: 22.08.2018
(51) Int. Cl.: C23C 24/08, H01M 8/0202, H01M 8/0215, H01M 8/0228, C23C 24/10, C04B 35/01, C04B 35/46, C25B 1/10, C25B 9/20

(54) **VERFAHREN ZUR HERSTELLUNG EINES INTERKONNEKTORS, INTERKONNEKTOR UND DESSEN VERWENDUNG**

(30) Priorität: 12.09.2017 DE 102017121016
(71) Anmelder: Deutsches Zentrum für Luft- und Raumfahrt e.V., 51147 Köln (DE)
(72) Erfinder: Gago Rodriguez, Aldo Saul, 70180 Stuttgart (DE); Han, Feng, 71065 Sindelfingen (DE); Costa, Remi, 70182 Sindelfingen (DE); Friedrich, Kaspar Andreas, 73733 Esslingen (DE)
(74) Vertreter: Hoeger, Stellrecht & Partner Patentanwälte mbB

(57) **Zusammenfassung**

Die vorliegende Erfindung betrifft ein Verfahren zur Herstellung eines Interkonnektors für eine elektrochemische Zelle, umfassend die Schritte:
- Bereitstellen eines flächigen Substrats aus einem metallischen Material mit einer ersten Seite und einer gegenüber liegenden zweiten Seite; und
- Aufbringen von Partikeln eines elektrisch leitfähigen, anorganischen Materials zumindest auf einen Teilbereich einer Oberfläche der ersten Seite des Substrats mittels eines nasschemischen Auftragverfahrens, um eine elektrisch leitende Schutzschicht auf der Oberfläche des Substrats zu bilden.

Die Erfindung betrifft ferner einen Interkonnektor sowie dessen Verwendung in einer elektrochemischen Zelle, insbesondere einer Protonenaustauschmembran-Elektrolysezelle.

## Beschreibung

Die vorliegende Erfindung betrifft ein Verfahren zur Herstellung eines Interkonnektors für eine elektrochemische Zelle.

Die Erfindung betrifft ferner einen Interkonnektor sowie dessen Verwendung in einer elektrochemischen Zelle, insbesondere einer Elektrolysezelle, einer Brennstoffzelle oder einer Metall-Luft-Batterie.

Die Erzeugung von Wasserstoff als mobiler Energieträger mittels Elektrolyse erlangt eine zunehmende Bedeutung, da die Erzeugung emissionsfrei erfolgen kann, wenn die Elektrolyse mit elektrischer Energie aus regenerativen Quellen, d.h. insbesondere Wind- oder Solarenergie, betrieben wird. Als Elektrolyseverfahren sind insbesondere die alkalische Elektrolyse und die Protonenaustauschmembran-Elektrolyse (PEM) bekannt. Dabei hat die PEM-Elektrolyse gegenüber der alkalischen Elektrolyse den entscheidenden Vorteil, dass sie bei wesentlich höheren Stromdichten betrieben werden kann, sodass dieses System für die praktische Anwendung trotz der höheren Kosten für die Elektrolysezelle eine große Bedeutung hat.

Ein Elektrolyseur umfasst eine Mehrzahl von Elektrolysezellen in einem Zellenstapel oder Stack, wobei die Einzelzellen in Form von Membran-Elektroden-Einheiten über sogenannte Interkonnektoren in Reihe geschaltet sind. Der Interkonnektor dient einerseits der elektrischen Kontaktierung der Elektroden und bildet andererseits einen fluiddichten Separator zwischen den benachbarten Zellen. Der Interkonnektor umfasst eine Bipolarplatte, die an ihren Oberflächen in der Regel auch geeignete Strukturen für die Zuführung von Wasser und die Abführung von Wasserstoff bzw. Sauerstoff aufweist, z.B. Fließkanäle, die ein sogenanntes Flowfield bilden. Alternativ kann die Aufgabe der Wasserverteilung auch durch einen porösen Stromkollektor übernommen werden, der zwischen der Bipolarplatte und der Katalysatorschicht der Elektrode angeordnet ist. Der Stromkollektor kann insbesondere als Gasdiffusionslage (GDL) ausgebildet sein.

Insbesondere bei einer PEM-Elektrolysezelle muss der Interkonnektor eine sehr gute Korrosionsbeständigkeit bei hohen Spannungen (größer als 2 V), hohen Stromdichten (größer als 2 A/cm²) und hohen Temperaturen (über 80 °C) aufweisen. Dies gilt in besonderem Maße für die Anodenseite des Interkonnektors, die in dem stark sauren Milieu (pH-Wert von etwa 0) unter Sauerstoffsättigung hochkorrosiven Bedingungen ausgesetzt ist. Um diese Voraussetzungen erfüllen zu können, werden Interkonnektoren für PEM-Elektrolysezellen überwiegend aus Titan hergestellt, was mit hohen Kosten verbunden ist. Tatsächlich entfallen etwas mehr als die Hälfte der Gesamtkosten eines PEM-Elektrolyseurs unter diesen Umständen auf die Herstellung des Interkonnektors.

Der Erfindung liegt daher die Aufgabe zugrunde, ein Herstellungsverfahren vorzuschlagen, mit dem die Kosten für einen korrosionsresistenten Interkonnektor gesenkt werden können.

Diese Aufgabe wird bei dem Verfahren der eingangs genannten Art erfindungsgemäß dadurch gelöst, dass es die Schritte umfasst:
- Bereitstellen eines flächigen Substrats aus einem metallischen Material mit einer ersten Seite und einer gegenüber liegenden zweiten Seite; und
- Aufbringen von Partikeln eines elektrisch leitfähigen, anorganischen Materials zumindest auf einen Teilbereich der Oberfläche der ersten Seite des Substrats mittels eines nasschemischen Auftragverfahrens, um eine elektrisch leitende Schutzschicht auf der Oberfläche des Substrats zu bilden.

Die Erfindung basiert auf der Idee, das Substrat des Interkonnektors (bzw. der Bipolarplatte) mindestens auf einer Seite, die in einer Elektrolysezelle bevorzugt die Anodenseite ist, mit einer elektrisch leitenden Schutzschicht, insbesondere einer Korrosionsschutzschicht, zu versehen. Aufgrund dieser Schutzschicht werden an die Korrosionsfestigkeit des Substrats geringere Anforderungen gestellt, sodass ein im Vergleich zu Titan wesentlich kostengünstigeres Material verwendet werden kann.

Vorzugsweise ist das flächige Substrat aus Stahl, insbesondere aus Edelstahl, aus einer Stahllegierung oder aus Kupfer gebildet. Insbesondere kann als Substrat ein Edelstahlblech verwendet werden, mit einer bevorzugten Dicke im Bereich von 1 bis 2 mm. Alternativ kann im Rahmen der Erfindung aber auch ein Substrat aus Aluminium oder Titan eingesetzt werden.

Das elektrisch leitfähige, anorganische Material der aufgebrachten Partikel ist vorzugsweise ein Keramikmaterial, wobei alternativ auch korrosionsbeständige Metalle wie Niob und Tantal verwendbar sind. Dadurch, dass die Schutzschicht auf der Oberfläche des Substrats sowohl elektrisch leitend als auch korrosionsresistent ist, kann ein geringer Kontaktwiderstand zwischen dem Interkonnektor bzw. der Bipolarplatte und einem angrenzenden Stromkollektor sichergestellt werden.

Verschiedene elektrisch leitfähige Keramikmaterialien sind dem Fachmann bekannt. Im Rahmen der Erfindung ist es besonders günstig, wenn das Keramikmaterial ausgewählt ist aus Verbindungen von Titan und Zinn, insbesondere aus Titansuboxid (Ti₄O₇), Titancarbid (TiC), Titandioxid (TiO₂) dotiert mit Vanadium, Molybdän oder Wolfram, und Zinndioxid (SnO₂) dotiert mit Indium oder Antimon; oder aus Graphit, Graphen und Graphenoxid. Diese Materialien sind unter den Einsatzbedingungen des Interkonnektors, insbesondere auch in einer PEM-Elektrolysezelle, chemisch und elektrochemisch stabil und weisen eine relativ gute Leitfähigkeit auf.

Als besonders günstig hat sich die Verwendung von Partikeln aus Titansuboxid als elektrisch leitfähigem Keramikmaterial im Rahmen des erfindungsgemäßen Herstellungsverfahrens erwiesen.

Die Partikel des elektrisch leitfähigen Materials können eine Partikelgröße von 1 nm bis 30 µm aufweisen, wobei Partikelgrößen im Bereich von 20 bis 200 nm bevorzugt sind, weiter bevorzugt im Bereich von 30 bis 50 nm. Dementsprechend kann die auf dem Substrat gebildete Schutzschicht unter Umständen sehr dünn sein, wobei die bevorzugte Mindestdicke in etwa dem Doppelten der Partikelgröße entspricht, d.h. es sollten theoretisch mindestens zwei Lagen von Partikeln des anorganischen Materials vorliegen. Die Schutzschicht kann aber auch wesentlich dicker ausgebildet werden.

Die Partikel des elektrisch leitfähigen Materials können verschiedene Partikelformen aufweisen. Insbesondere sind sphärische oder im Wesentlichen sphärische Partikel für das erfindungsgemäße Verfahren geeignet. Es können ggf. aber auch Flocken, Fasern, Nanoröhrchen, Dendriten oder Aerogels eingesetzt werden.

Die Partikel werden bei dem erfindungsgemäßen Verfahren nasschemisch aufgetragen, wobei das Auftragverfahren vorzugsweise ausgewählt ist aus Walzen, Tauchen, Spritzen, Inkjetdruck, Siebdruck, Foliengießen und Rotationsbeschichtung. Diese nasschemischen Verfahren sind nicht nur einfach und kostengünstig durchzuführen, sondern haben insbesondere gegenüber thermischen Spritzverfahren wie z.B. Plasmaspritzen den Vorteil, dass keine hohe thermische Belastung des elektrisch leitfähigen Materials erfolgt. Gerade bei Titansuboxid oder auch bei dotierten Oxiden können sehr hohe Temperaturen zu einer Änderung der Stöchiometrie führen, wodurch sich die Eigenschaften des Materials oder zumindest die Reproduzierbarkeit verschlechtern können.

Ein weiterer Vorteil ist darin zu sehen, dass die nasschemischen Auftragverfahren leicht skalierbar sind und auch für die Herstellung von Interkonnektoren für großflächige Zellen von 1.000 cm² oder mehr geeignet sind. Auf diese Weise können große Elektrolyseure für einen Betrieb im Megawattbereich hergestellt werden. Allgemein kann das Substrat im Rahmen der Erfindung z.B. eine Fläche von 1 cm² bis 1 m³ aufweisen.

Bei dem nasschemischen Auftragverfahren werden die Partikel des elektrisch leitfähigen Materials üblicherweise in einer Suspension auf die Oberfläche des Substrats aufgebracht. Je nach Auftragverfahren und der Art des verwendeten Suspensionsmediums kann die Suspension sehr unterschiedliche Viskositäten aufweisen, d.h. sowohl eine niedrigviskose Aufschlämmung als auch eine hochviskose Paste fallen unter den Begriff. Nach dem Aufbringen der Suspension erfolgt typischerweise eine Trocknung, um das Suspensionsmedium zu entfernen, wiederum in Abhängigkeit von der Art des Auftragverfahrens.

Bei einer bevorzugten Ausführungsform der Erfindung werden die Partikel des elektrisch leitfähigen Materials zusammen mit einem Bindemittel auf die Oberfläche des Substrats aufgebracht. Durch das Bindemittel kann zum einen die Kohäsion der Partikel untereinander und die Adhäsion an das Substrat bewirkt werden. Das Bindemittel führt auch dazu, dass die Schutzschicht im Wesentlichen porenfrei und fluiddicht ist, sodass ein effektiver Korrosionsschutz des Substrats bewirkt wird. Dabei muss der Anteil an Partikeln des anorganischen Materials im Verhältnis zum Bindemittel ausreichend hoch sein, um die Leitfähigkeit der Schutzschicht insgesamt durch einen unmittelbaren Kontakt der einzelnen Partikel zu gewährleisten.

Bei einer weiteren vorteilhaften Ausführungsform der Erfindung wird ein Bindemittel nicht zusammen mit den Partikeln des elektrisch leitfähigen Materials, sondern erst nach dem Aufbringen der Partikel in einem weiteren Schritt aufgebracht. Auch auf diese Weise kann das Bindemittel in Freiräume zwischen den Partikeln eindringen, um die Schutzschicht fluiddicht zu machen. Allerdings darf die Oberfläche der Schutzschicht nicht vollständig von dem Bindemittel bedeckt sein, da dies den elektrischen Kontakt zwischen dem Interkonnektor bzw. der Bipolarplatte und einem angrenzenden Stromkollektor verhindern würde. Dies kann wenn nötig durch eine anschließende mechanisehe oder chemische Oberflächenbehandlung der Schutzschicht, bei der überschüssiges Bindemittel entfernt wird, sichergestellt werden.

Das Bindemittel ist vorzugweise ein organisches Polymer, das bevorzugt ausgewählt ist aus Epoxidharz, Polyvinylacetat (PVA), Polyvinylbutyrat (PVB), Polytetrafluorethylen (PTFE) und Polyvinylidenfluorid (PVD).

Gemäß einer weiteren Ausführungsform der Erfindung wird das Bindemittel nach dem Aufbringen der Partikel gehärtet wird, insbesondere mittels UV-Härtung.

Weiterhin ist es bevorzugt, wenn die Partikel des elektrisch leitfähigen Materials nach dem Aufbringen thermisch und/oder durch erhöhten Druck behandelt werden. Auf diese Weise können die Partikel verdichtet und an ihrer Oberfläche miteinander verschmolzen werden. Insbesondere können die Partikel gesintert werden. Dadurch wird die Porosität der Schutzschicht verringert und ihre Festigkeit und Haftung an dem Substrat erhöht. Die Behandlung der Partikel durch Temperatur und/oder Druck kann unabhängig davon erfolgen, ob die Partikel zusammen mit einem Bindemittel auf das Substrat aufgebracht wurden.

Gemäß einer weiteren Ausgestaltung des erfindungsgemäßen Verfahrens wird die Oberfläche des Substrats vor dem Aufbringen der Partikel des elektrisch leitfähigen Materials aufgeraut, insbesondere mittels Sandstrahlen oder Ätzen. Hierdurch kann die Haftung der Schutzschicht auf dem Substrat verbessert werden.

Gemäß einer bevorzugten Ausführungsform der Erfindung ist die erste Seite des Substrats mit Strömungskanälen versehen, wobei die Partikel des elektrisch leitfähigen Materials nur auf den Bereich der Oberfläche zwischen den Strömungskanälen aufgebracht werden. Da nur diese erhabenen Bereiche des Flowfields mit einem Stromkollektor in Kontakt stehen, ist nur dort eine elektrisch leitende Schutzschicht erforderlich. In diesem Fall ist es bevorzugt, wenn zumindest der Bereich der Oberfläche in den Strömungskanälen (d.h. der Boden und die Wände der Strömungskanäle) mit einem organischen Polymer beschichtet wird, um in diesem Bereich eine entsprechende Schutzwirkung zu erzielen. Als organisches Polymer kann insbesondere dasselbe Bindemittel verwendet werden, das in Verbindung mit den elektrisch leitfähigen Partikeln verwendet wird. Das organische Polymer kann gehärtet werden, z.B. mittels UV-Härtung.

Die elektrisch leitende Schutzschicht wird erfindungsgemäß auf mindestens einer Seite des Substrats gebildet, sie kann aber optional auch auf beiden Seiten gebildet werden. Dementsprechend umfasst das Verfahren gemäß einer weiteren Ausführungsform ferner das Aufbringen von Partikeln eines elektrisch leitfähigen, anorganischen Materials zumindest auf einen Teilbereich einer Oberfläche der zweiten Seite des Substrats mittels eines nasschemischen Auftragverfahrens, um eine elektrisch leitende Schutzschicht auf der Oberfläche des Substrats zu bilden.

Die vorstehend erläuterten Vorteile und Ausführungsformen des erfindungsgemäßen Verfahrens gelten in derselben Weise auch für einen zweiseitig beschichteten Interkonnektor.

Der Erfindung liegt ferner die Aufgabe zugrunde, eine korrosionsresistente Interkonnektor vorzuschlagen, die kostengünstig herstellbar ist.

Diese Aufgabe wird bei der Interkonnektor der eingangs genannten Art erfindungsgemäß dadurch gelöst, dass der Interkonnektor ein flächiges Substrat aus einem metallischen Material mit einer ersten Seite und einer gegenüber liegenden zweiten Seite umfasst, wobei zumindest auf einem Teilbereich einer Oberfläche der ersten Seite des Substrats eine elektrisch leitende Schutzschicht angeordnet ist, die ein elektrisch leitfähiges, anorganisches Material umfasst.

Das elektrisch leitfähige, anorganische Material ist insbesondere ein Keramikmaterial, das bevorzugt ausgewählt ist aus Verbindungen von Titan und Zinn, insbesondere aus Titansuboxid (Ti₄O₇), Titancarbid (TiC), Titandioxid (TiO₂) dotiert mit Vanadium, Molybdän oder Wolfram, und Zinndioxid (SnO₂) dotiert mit Indium oder Antimon; oder aus Graphit, Graphen und Graphenoxid. Alternativ sind aber auch korrosionsbeständige Metalle wie Niob und Tantal verwendbar.

Die elektrisch leitende Schutzschicht weist bevorzugt eine Dicke im Bereich von 100 nm bis 100 µm. Die bevorzugte Mindestdicke beträgt dabei in etwa das Doppelte der für die Herstellung der Schutzschicht verwendeten Partikel des elektrisch leitfähigen Materials. Die Schutzschicht kann aber auch wesentlich dicker sein, so lange ihr elektrischer Widerstand nicht zu hoch wird.

Die elektrisch leitende Schutzschicht ist bevorzugt fluiddicht. Dadurch kann ein effektiver Korrosionsschutz des Substrats bewirkt werden, insbesondere gegenüber den hochkorrosiven Bedingungen auf der Anodenseite einer PEM-Elektrolysezelle.

Der erfindungsgemäße Interkonnektor ist vorteilhafterweise gemäß dem erfindungsgemäßen Verfahren hergestellt. Weitere Vorteile und bevorzugte Ausführungsformen des Interkonnektor ergeben sich daher aus der vorstehenden Beschreibung des erfindungsgemäßen Herstellungsverfahrens.

Gegenstand der vorliegenden Erfindung ist ferner die Verwendung eines erfindungsgemäßen Interkonnektor in einer elektrochemischen Zelle, bevorzugt in einer Elektrolysezelle, insbesondere einer PEM-Elektrolysezelle oder einer alkalischen Elektrolysezelle, in einer Brennstoffzelle, insbesondere einer Hochtemperatur-PEM-Zelle, oder in einer Metall-Luft-Batterie. Dabei ist die erste Seite des Interkonnektors die Anodenseite und die zweite Seite ist die Kathodenseite.

Diese und weitere Vorteile der Erfindung werden anhand des nachfolgenden Ausführungsbeispiels näher erläutert. Es zeigen im Einzelnen:
- Figur 1:: Schematische Darstellung des Anodenbereichs einer PEM-Elektrolysezelle mit einem erfindungsgemäßen Interkonnektor;
- Figur 2:: vergrößerte schematische Darstellung der elektrisch leitenden Schutzschicht einen erfindungsgemäßen Interkonnektors; und
- Figur 3:: lichtmikroskopische Querschnittsdarstellung eines erfindungsgemäßen Interkonnektors.

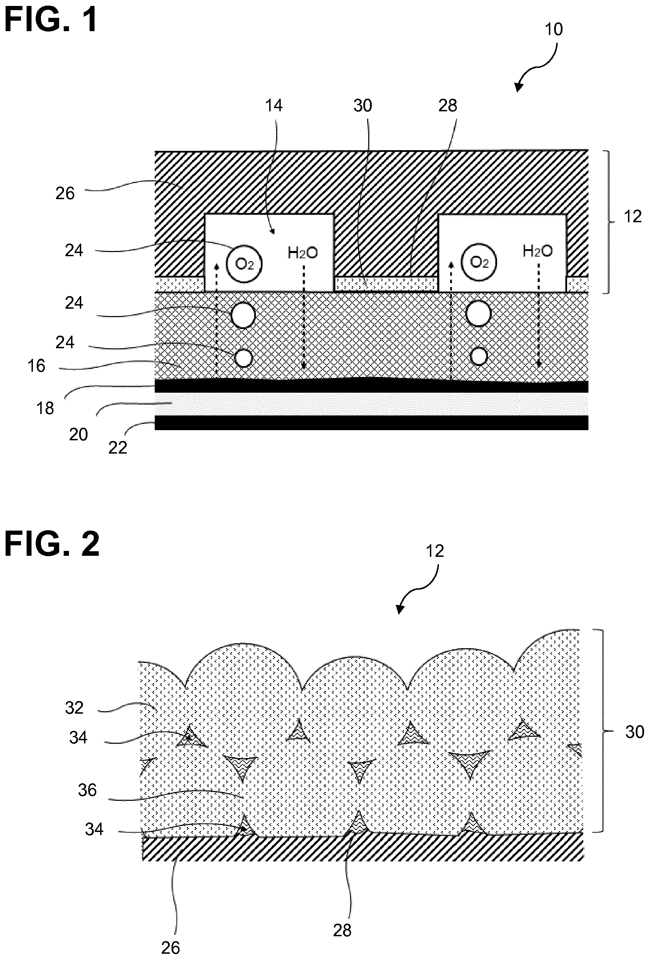

Die Figur 1 zeigt einen schematischen Querschnitt durch den Anodenbereich einer elektrochemischen Zell 10, hier einer PEM-Elektrolysezelle. Die PEM-Elektrolysezelle 10 umfasst einen erfindungsgemäßen Interkonnektor 12, der an seiner ersten Seite, welche die Anodenseite ist, mit Strömungskanälen 14 für die Zuführung von Wasser (H₂O) und die Abführung von Sauerstoff (O₂) versehen ist. Die Strömungskanäle 14 bilden ein sogenanntes Flowfield auf der Anodenseite des Interkonnektors 12, der auch als Bipolarplatte bezeichnet werden kann.

Die zweite Seite des Interkonnektors 12, welche die Kathodenseite ist, kann ebenfalls mit Strömungskanälen versehen sein (in der Figur nicht dargestellt).

An den Interkonnektor 12 schließt sich ein anodischer Stromkollektor 16 an, der eine poröse Struktur aufweist und z.B. aus Titan gebildet ist. Hierauf folgen ein Anodenkatalysator 18, eine Protonenaustauschmembran 20 und ein Kathodenkatalysator 22. Ein sich daran anschließender kathodischer Stromkollektor und die Kathodenseite eines weiteren Interkonnektors sind in der Figur nicht dargestellt.

Beim Betrieb der PEM-Elektrolysezelle 10 diffundiert Wasser von den Strömungskanälen 14 durch den anodischen Stromkollektor 16 in Richtung der Protonenaustauschmembran 20 und wird dort am Anodenkatalysator 18 unter Bildung von Sauerstoff elektrochemisch oxidiert. Der gebildete Sauerstoff diffundiert durch den anodischen Stromkollektor 16 in die Strömungskanäle 14 (angedeutet durch die Gasblasen 24).

Der erfindungsgemäße Interkonnektor 12 umfasst ein Substrat 26 aus einem metallischen Material, beispielsweise aus Edelstahl. Um das Substrat vor den hochkorrosiven Bedingungen im Anodenbereich der PEM-Elektrolysezelle 10 zu schützen, ist auf dem Bereich der Oberfläche 28 des Substrats 26 zwischen den Strömungskanälen 14 eine Schutzschicht 30 angeordnet, die ein elektrisch leitfähiges, anorganisches Material umfasst, insbesondere ein Keramikmaterial, beispielsweise Titansuboxid (Ti₄O₇). Die Schutzschicht 30 ist sowohl korrosionsresistent als auch elektrisch leitend, sodass eine elektrische Kontaktierung zwischen dem Substrat 26 und dem anodischen Stromkollektor 16 gewährleistet ist.

Die Bereiche der Oberfläche 28 des Substrats 26 in den Strömungskanälen 14 können mit einem organischen Polymer als Schutzschicht versehen sein (in der Figur nicht dargestellt).

Die Figur 2 zeigt schematisch eine vergrößerte Darstellung der Schutzschicht 30 auf der Oberfläche 28 des Substrats 26. Der Interkonnektor 12 ist gemäß dem erfindungsgemäßen Verfahren hergestellt, indem Partikel 32 des elektrisch leitfähigen, anorganischen Materials auf die entsprechenden Bereiche der Oberfläche 28 des Substrats 26 mittels eines nasschemischen Auftragverfahrens zusammen mit einem Bindemittel 34 aufgebracht wurden. Anschließend wurden die Partikel 32 durch erhöhte Temperatur und/Druck gesintert, sodass die Partikel 32 an ihren Kontaktbereichen 36 miteinander verschmolzen sind. Die Zwischenräume zwischen den Partikeln 32 sind durch das Bindemittel 34, beispielsweise ein Epoxidharz, aufgefüllt, sodass die Schutzschicht 30 insgesamt porenfrei und fluiddicht ist.

Die Partikel 30 des elektrisch leitfähigen Materials weisen typischerweise eine Partikelgröße im Bereich von 20 bis 200 nm auf. Die Schutzschicht 30 sollte für eine effektive Schutzwirkung mindestens zwei Lagen der Partikel 32 umfassen, wie in der Figur 2 dargestellt, sie kann jedoch auch wesentlich dicker sein, typischerweise im Bereich von 100 nm bis 100 µm.

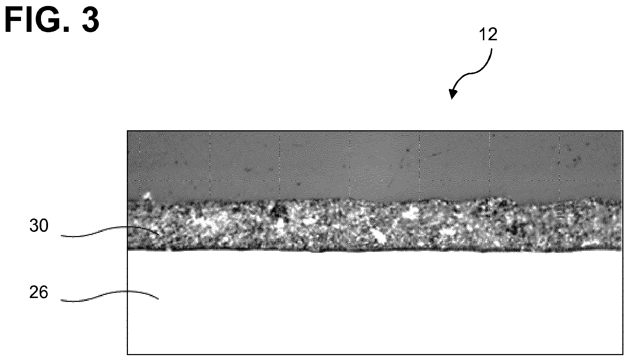

Die Figur 3 zeigt einen lichtmikroskopischen Querschnitt durch einen erfindungsgemäßen Interkonnektor 12, wobei das Substrat 26 aus Edelstahl gebildet ist und die Schutzschicht 30 aus Partikeln von Titansuboxid (Ti₄O₇) nach dem erfindungsgemäßen Verfahren hergestellt wurde. Die Dicke der Schutzschicht 30 beträgt in diesem Fall ca. 25 µm.

Bei dem dunklen Bereich oberhalb der Schutzschicht 30 handelt es sich um ein Epoxidharz, welches lediglich zur Präparation der Probe für die lichtmikroskopische Aufnahme verwendet wurde.

### Bezugszeichenliste

- 10: PEM-Elektrolysezelle
- 12: Interkonnektor bzw. Bipolarplatte
- 14: Strömungskanäle
- 16: Anodischer Stromkollektor
- 18: Anodenkatalysator
- 20: Protonenaustauschmembran
- 22: Kathodenkatalysator
- 24: Gasblasen
- 26: Substrat
- 28: Oberfläche
- 30: Schutzschicht
- 32: Partikel aus elektrisch leitfähigem, anorganischen Material
- 34: Bindemittel
- 36: Kontaktbereiche

## Patentansprüche

1. Verfahren zur Herstellung eines Interkonnektors (12) für eine elektrochemische Zelle (10), umfassend die Schritte:
- Bereitstellen eines flächigen Substrats (26) aus einem metallischen Material mit einer ersten Seite und einer gegenüber liegenden zweiten Seite; und
- Aufbringen von Partikeln (32) eines elektrisch leitfähigen, anorganischen Materials zumindest auf einen Teilbereich einer Oberfläche (28) der ersten Seite des Substrats mittels eines nasschemischen Auftragverfahrens, um eine elektrisch leitende Schutzschicht (30) auf der Oberfläche (28) des Substrats (26) zu bilden.

2. Verfahren nach Anspruch 1, wobei das flächige Substrat (26) aus Stahl, insbesondere aus Edelstahl, aus einer Stahllegierung, aus Kupfer, Aluminium oder Titan gebildet ist; und/oder wobei das elektrisch leitfähige Material ein Keramikmaterial ist, das bevorzugt ausgewählt ist aus Verbindungen von Titan und Zinn, insbesondere aus Titansuboxid (Ti₄O₇), Titancarbid (TiC), Titandioxid (TiO₂) dotiert mit Vanadium, Molybdän oder Wolfram, und Zinndioxid (SnO₂) dotiert mit Indium oder Antimon; oder aus Graphit, Graphen und Graphenoxid.

3. Verfahren nach einem der vorhergehenden Ansprüche, wobei die Partikel (32) des elektrisch leitfähigen Materials eine Partikelgröße im Bereich von 1 nm bis 30 µm aufweisen, bevorzugt von 20 bis 200 nm, weiter bevorzugt im Bereich von 30 bis 50 nm.

4. Verfahren nach einem der vorhergehenden Ansprüche, wobei das nasschemische Auftragverfahren ausgewählt ist aus Walzen, Tauchen, Spritzen, Inkjetdruck, Siebdruck, Foliengießen und Rotationsbeschichtung.

5. Verfahren nach einem der vorhergehenden Ansprüche, wobei das Substrat (26) eine Fläche im Bereich von 1 cm² bis 1 m³ aufweist.

6. Verfahren nach einem der vorhergehenden Ansprüche, wobei die Partikel (32) des elektrisch leitfähigen Materials zusammen mit einem Bindemittel (34) auf die Oberfläche (28) des Substrats (26) aufgebracht werden; oder wobei nach dem Aufbringen der Partikel (32) des elektrisch leitfähigen Materials in einem weiteren Schritt ein Bindemittel (34) aufgebracht wird.

7. Verfahren nach Anspruch 6, wobei das Bindemittel (34) ein organisches Polymer ist, das bevorzugt ausgewählt ist aus Epoxidharz, Polyvinylacetat (PVA), Polyvinylbutyrat (PVB), Polytetrafluorethylen (PTFE) und Polyvinylidenfluorid (PVD); und/oder wobei das Bindemittel (34) nach dem Aufbringen der Partikel (32) gehärtet wird, insbesondere mittels UV-Härtung.

8. Verfahren nach einem der vorhergehenden Ansprüche, wobei die Partikel (32) des elektrisch leitfähigen Materials nach dem Aufbringen thermisch und/oder durch erhöhten Druck behandelt werden.

9. Verfahren nach einem der vorhergehenden Ansprüche, wobei die erste Seite des Substrats (26) mit Strömungskanälen (14) versehen ist, und wobei die Partikel (32) des elektrisch leitfähigen Materials nur auf den Bereich der Oberfläche (28) zwischen den Strömungskanälen (14) aufgebracht werden, wobei bevorzugt zumindest der Bereich der Oberfläche (28) in den Strömungskanälen (14) mit einem organischen Polymer beschichtet wird.

10. Verfahren nach einem der Ansprüche, ferner umfassend das Aufbringen von Partikeln (32) eines elektrisch leitfähigen, anorganischen Materials zumindest auf einen Teilbereich einer Oberfläche (28) der zweiten Seite des Substrats (26) mittels eines nasschemischen Auftragverfahrens, um eine elektrisch leitende Schutzschicht (30) auf der Oberfläche (28) des Substrats (26) zu bilden.

11. Interkonnektor (12) für eine elektrochemische Zelle (10), umfassend ein flächiges Substrats (26) aus einem metallischen Material mit einer ersten Seite und einer gegenüber liegenden zweiten Seite, wobei zumindest auf einen Teilbereich einer Oberfläche (28) der ersten Seite des Substrats (26) eine elektrisch leitende Schutzschicht (30) angeordnet ist, die ein elektrisch leitfähiges, anorganisches Material umfasst.

12. Interkonnektor (12) nach Anspruch 11, wobei das elektrisch leitfähige, anorganische Material ein Keramikmaterial ist, das bevorzugt ausgewählt ist aus Verbindungen von Titan und Zinn, insbesondere aus Titansuboxid (Ti₄O₇), Titancarbid (TiC), Titandioxid (TiO₂) dotiert mit Vanadium, Molybdän oder Wolfram, und Zinndioxid (SnO₂) dotiert mit Indium oder Antimon; oder aus Graphit, Graphen und Graphenoxid.

13. Interkonnektor (12) nach Anspruch 11 oder 12, wobei die elektrisch leitende Schutzschicht (30) eine Dicke im Bereich von 100 nm bis 100 µm aufweist; und/oder wobei die elektrisch leitende Schutzschicht (30) fluiddicht ist.

14. Interkonnektor (12) nach einem der Ansprüche 11 bis 13, hergestellt gemäß einem Verfahren nach einem der Ansprüche 1 bis 14.

15. Verwendung eines Interkonnektors (12) nach einem der Ansprüche 11 bis 14 in einer elektrochemischen Zelle (10), bevorzugt in einer Elektrolysezelle, insbesondere einer PEM-Elektrolysezelle oder einer alkalischen Elektrolysezelle, in einer Brennstoffzelle, insbesondere einer Hochtemperatur-PEM-Zelle, oder in einer Metall-Luft-Batterie, wobei die erste Seite des Interkonnektors (12) die Anodenseite und die zweite Seite die Kathodenseite ist.
